# NEUE EUROPÄISCHE PATENTSCHRIFT

(11) **EP 2 462 177 B2**
(45) Veröffentlichungstag und Bekanntmachung des Hinweises auf die Entscheidung über den Einspruch: **08.08.2018**
(45) Hinweis auf die Patenterteilung: 06.01.2016
(21) Anmeldenummer: 10739607.9
(22) Anmeldetag: 02.08.2010
(51) Int. Cl.: C08G 18/08, C08G 18/67, C08G 18/78, C09D 175/16

(54) **STRAHLUNGSHÄRTBARE WASSERDISPERGIERBARE POLYURETHANE UND POLYURETHANDISPERSIONEN**
RADIATION-CURABLE, WATER-DISPERSIBLE POLYURETHANES AND POLYURETHANE DISPERSIONS
POLYURÉTHANNES HYDRODISPERSIBLES, DURCISSANT AUX RAYONNEMENTS ET DISPERSIONS DE POLYURÉTHANNE CORRESPONDANTES

(30) Priorität: 06.08.2009 EP 09167330
(43) Veröffentlichungstag der Anmeldung: 13.06.2012
(73) Patentinhaber: BASF SE, 67056 Ludwigshafen am Rhein (DE)
(72) Erfinder: SCHWALM, Reinhold, 67157 Wachenheim (DE); NEUMANN, Susanne, 67346 Speyer (DE); VÖLLINGER, Frank, 76833 Knöringen (DE); THÜRY, Peter, 67069 Ludwigshafen (DE); BURKHARDT, Uwe, 67063 Ludwigshafen (DE); ANDES, Katharina, 67133 Maxdorf (DE); BECKER, Tanja, 67122 Altrip (DE); BIEHLER, Manfred, 76831 Ilbesheim (DE)
(86) Internationale Anmeldenummer: PCT/EP2010/061170
(87) Internationale Veröffentlichungsnummer: WO 2011/015540

(56) Entgegenhaltungen:
- EP-A1- 1 707 600
- EP-A1- 2 130 846
- EP-A2- 0 694 531
- US-A1- 2003 220 446
- US-A1- 2006 014 099

## Beschreibung

Die vorliegende Erfindung betrifft mit UV-Strahlung härtbare, dispergierbare Polyurethane und Polyurethandispersionen, ein Verfahren zu deren Herstellung und deren Verwendung.

Aus DE 102008002008 und WO 2008/148739 sind strahlungshärtbare wasserdispergierbare Polyurethane bekannt, die ein Polylakylenglykol als Aufbaukomponente enthalten.

Nachteilig ist, daß die langkettigen Polylakylenglykole einerseits durch ihre hohe Molmasse die Dichte an strahlungshärtbaren Gruppen in den Polyurethanen herabsetzen und andererseits durch ihre Hydrophilie eine nur zögerliche Trocknung bewirken, so daß die mit diesen erhaltenen Filme lange klebrig bleiben. Langkettige Polyalkylenglykole wirken sich aufgrund Ihrer Hydrophilie außerdem ungünstig auf die Wasserbeständigkeit der entstehenden Filme aus.

WO 2007/063025 und WO 2006/089935 beschreiben strahlungshärtbare wasserdispergierbare Polyurethane auf Basis allophanatgruppenhaltiger Polyisocyanate mit einer hohen Doppelbindungsdichte von 1,3 bis zu 8 mol/kg. Die in den explizit offenbarten Beispielen angegebenen Doppelbindungsdichten betragen bis zu 2 bzw. 2,4 mol/kg.

Die mit diesen Polyurethanen erhaltenen Beschichtungen zeigen eine hohe Härte und Elastizität, die jedoch bei verschiedensten Anwendungen, z.B. auf Holzfensterrahmen, nicht ausreichend ist. Weiterhin tendieren insbesondere solche Dispersionen, die längerkettige Polyetherolsegmente enthalten, bei längeren Lagerzeiten zu Entmischungen.

Mittels energiereicher Strahlung härtbare, witterungsstabile Polyurethane beansprucht EP 1118627 (=US 6444721). Die Beschichtungen werden hergestellt durch Trocknen von Filmen einer Polyurethandispersion, hergestellt aus Polyisocyanaten, cycloaliphatischen Diolen und/oder Diaminen, NCO reaktiven Verbindungen mit mindestens einer ungesättigten Gruppe sowie einer dispergieraktiven Gruppe. Die auf diese Weise hergestellten Beschichtungen sind witterungsstabil. Nachteilig erwies sich die relativ niedrige Kratzbeständigkeit.

EP 1707600 beschreibt Beschichtungszusammensetzungen enthaltend zwei verschiedene strahlungshärtbare und wasserdispergierbare Polyurethane.

Aufgabe der vorliegenden Erfindung war es, strahlungshärtbare wasserdispergierbare Polyurethane zur Verfügung zu stellen, die in Form ihrer Dispersionen stabil sind, klebfreie Filme liefern und Beschichtungen mit einer hohen Härte ergeben.

Die Aufgabe wurde gelöst durch Mischungen strahlungshärtbarer wasserdispergierbarer Polyurethane, enthaltend mindestens ein strahlungshärtbares wasserdispergierbares Polyurethan (A), aufgebaut aus
(a1) mindestens einem Polyisocyanat auf Basis aliphatischer und/oder cycloapliphatischer Diisocyanate,
(a2) wenigstens einer Verbindung mit mindestens einer, bevorzugt genau einer gegenüber Isocyanatgruppen reaktiven Gruppe und mindestens einer radikalisch polymerisierbaren C=C-Doppelbindung,
(a3) optional wenigstens einer Verbindung mit mindestens zwei gegenüber Isocyanatgruppen reaktiven Gruppen, die ausgewählt sind unter Hydroxy-, Mercapto-, primären und/oder sekundären Aminogruppen, mit einem zahlenmittleren Molgewicht Mₙ von nicht mehr als 500 g/mol,
(a4) optional wenigstens ein Polyesterol, das eine Funktionalität an freien Hydroxygruppen von mindestens 2 aufweist, mit einem zahlenmittleren Molekulargewicht Mₙ zwischen 500 und 4000 (zu bestimmen durch Gelpermeationschromatographie mit Polystyrol als Standard und Tetrahydrofuran als Elutionsmittel),
(a5) mindestens einer Verbindung mit mindestens einer gegenüber Isocyanat reaktiven Gruppe und mindestens einer dispergieraktiven Gruppe,
(a6) optional wenigstens einer von (a2) und (a5) verschiedenen Verbindung, die genau eine gegenüber Isocyanatgruppen reaktive Gruppe aufweist, sowie
(a7) optional wenigstens einem von (a1) verschiedenen Polyisocyanat,
wobei die Menge an gegenüber Isocyanatgruppen reaktiven Gruppen in (a4) 0 bis nicht mehr als 10 mol% bezogen auf die Summe der Isocyanatgruppen in (a1) und (a7) beträgt, und
wobei das Polyurethan (A) mindestens 3 mol/kg radikalisch polymerisierbare C=C-Doppelbindungen aufweist,
und mindestens ein von (A) verschiedenes strahlungshärtbares wasserdispergierbares Polyurethan (B), aufgebaut aus
(b1) mindestens einem Di- oder Polyisocyanat auf Basis aliphatischer und/oder cycloaliphatischer Diisocyanat,
(b2) wenigstens einer Verbindung mit mindestens einer, bevorzugt genau einer gegenüber Isocyanatgruppen reaktiven Gruppe und mindestens einer radikalisch polymerisierbaren C=C-Doppelbindung,
(b3) optional wenigstens einer Verbindung mit mindestens zwei gegenüber Isocyanatgruppen reaktiven Gruppen, die ausgewählt sind unter Hydroxy-, Mercapto-, primären und/oder sekundären Aminogruppen, mit einem zahlenmittleren Molgewicht Mₙ von nicht mehr als 500 g/mol,
(b4) obligat wenigstens einer Verbindung mit mindestens zwei gegenüber Isocyanatgruppen reaktiven Gruppen, die ausgewählt sind unter Hydroxy-, Mercapto-, primären und/oder sekundären Aminogruppen, mit einem zahlenmittleren Molgewicht Mₙ von mehr als 500 g/mol,
(b5) mindestens einer Verbindung mit mindestens einer gegenüber Isocyanat reaktiven Gruppe und mindestens einer dispergieraktiven Gruppe,
(b6) optional wenigstens einer von (b2) und (b5) verschiedenen Verbindung, die genau eine gegenüber Isocyanatgruppen reaktive Gruppe aufweist, sowie
(b7) optional wenigstens einem von (b1) verschiedenen Polyisocyanat,
wobei es sich bei der wenigstens einen Verbindung (b4) um ein Polyesterdiol mit einem zahlenmittleren Molekulargewicht Mₙ zwischen 500 und 4000 (zu bestimmen durch Gelpermeationschromatographie mit Polystyrol als Standard und Tetrahydrofuran als Elutionsmittel) handelt,
wobei die Menge an gegenüber Isocyanatgruppen reaktiven Gruppen in (b4) mehr als 10 mol% bezogen auf die Summe der Isocyanatgruppen in (b1) und (b7) beträgt,
mit einem Massenverhältnis von (A) : (B) von 5:95 bis 95:5,
dadurch gekennzeichnet, dass das Polyurethan (A) eine Glasübergangstemperatur von mehr als 20°C und das Polyurethan (B) eine Glasübergangstemperatur von nicht mehr als 10°C aufweist (zu bestimmen als Tg nach der DSC-Methode gemäß ASTM 3418/82 mit einer Aufheizrate von 10°C/min) und es sich bei der Verbindung (a1) um ein Polyisocyanat mit mindestens einer Gruppierung ausgewählt aus der Gruppe bestehend aus Isocyanuraten, Biureten und Allophanaten handelt.

Bevorzugt beträgt das Massenverhältnis von (A) : (B) von 10:90 bis 90:10, besonders bevorzugt 20:80 bis 80:20, ganz besonders bevorzugt 30:70 bis 70:30 und insbesondere 40:60 bis 60:40.

In den erfindungsgemäßen Dispersionen werden bevorzugt keine isocyanatgruppenhaltigen Verbindungen eingesetzt, bei denen die Isocyanatgruppen teilweise oder vollständig mit sogenannten Blockierungsmitteln umgesetzt wurden. Unter Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche erfindungsgemäß bevorzugt nicht eingesetzten Verbindungen mit blockierten Isocyanatgruppen kommen üblicherweise in Dual-Cure-Beschichtungsmitteln zur Anwendung, die über Isocyanatgruppenhärtung endgehärtet werden. Bevorzugt weisen die erfindungsgemäßen Polyurethandispersionen nach ihrer Herstellung im Wesentlichen keine freien Isocyanatgruppen mehr auf, d.h. in der Regel weniger als 1 Gew.-% NCO, bevorzugt weniger als 0,75, besonders bevorzugt weniger als 0,66 und ganz besonders bevorzugt weniger als 0,3 Gew.-% NCO (berechnet mit einem Molgewicht von 42 g/mol).

### Komponenten (a1) und (b1)

Als Polyisocyanate als Komponenten (a1) und (b1) sind für die erfindungsgemäßen Polyurethane besonders Polyisocyanate auf Basis (cyclo)aliphatischer Diisocyanate geeignet. Als Komponente (b1) sind zusätzlich (cyclo)aliphatische Diisocyanate geeignet.

Der Begriff (cyclo)aliphatisch steht in dieser Schrift kurz für cycloaliphatisch oder aliphatisch.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Die erfindungsgemäß einsetzbaren Polyisocyanate weisen keine aromatischen Gruppen auf.

Bei den monomeren Isocyanaten handelt es sich bevorzugt um Diisocyanate, die genau zwei Isocyanatgruppen tragen. Es könnte sich aber prinzipiell auch um Monoisocyanate mit einer Isocyanatgruppe handeln, diese sind aber weniger bevorzugt.

Es kommen prinzipiell auch höhere Isocyanate mit im Mittel mehr als 2 Isocyanatgruppen in Betracht, diese sind aber weniger bevorzugt. Dafür eignen sich beispielsweise Triisocyanate wie Triisocyanatononan oder 2'-Isocyanatoethyl-(2,6-diisocyanatohexanoat), oder die Gemische aus Di-, Tri- und höheren Polyisocyanaten.

Die monomeren Isocyanate weisen im Wesentlichen keine Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche aliphatische Diisocyanate sind Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat), Trimethylhexandiisocyanat oder Tetramethylhexandiisocyanat. Beispiele für cycloaliphatische Diisocyanate sind 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Besonders bevorzugte Diisocyanate sind 1,6-Hexamethylendiisocyanat, 1,3-Bis(isocyanatomethyl)cyclo-hexan und Isophorondiisocyanat, ganz besonders bevorzugt sind Isophorondiisocyanat und 1,6-Hexamethylendiisocyanat, insbesondere bevorzugt ist Isophorondiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Der Gehalt an isomeren Verbindungen im Diisocyanat spielt für das erfindungsgemäße Verfahren keine entscheidende Rolle. So kann 1,6-Hexamethylendiisocyanat beispielsweise einen geringen Anteil an 2- und/oder 3-Methyl-1,5-pentamethylendiisocyanat enthalten.

Für die vorliegende Erfindung können Polyisocyanate sowohl auf Basis solcher Diisocyanate eingesetzt werden, die durch Phosgenierung der korrespondierenden Amine erhalten wird, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, wie 1,6-Hexamethylendiisocyanat (HDI), hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was zu günstigen Farbzahlen der Produkte führen kann. Es stellt einen weiteren Vorteil der vorliegenden Erfindung dar, daß das erfindungsgemäße Verfahren auf aliphatischen Diisocyanaten basiert und unabhängig von deren Herstellung ist, d.h. unabhängig davon, ob die Herstellung über eine Phosgenierung oder ein phosgenfreies Verfahren erfolgt ist.

In einer Ausführungsform der vorliegenden Erfindung weist das Diisocyanat einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Diisocyanate mit einem höheren Chlorgehalt eingesetzt werden, beispielsweise bis zu 500 ppm.

Selbstverständlich können auch Gemische aus Diisocyanat, das durch Umsetzung des korrespondierenden Diamins mit beispielsweise Harnstoff und Alkoholen und Spaltung der erhaltenen Biscarbaminsäureester erhalten worden ist, mit solchem Diisocyanat, das durch Phosgenierung des korrespondierenden Amins erhalten worden sind, eingesetzt werden.

Bei den Polyisocyanaten auf Basis dieser Diisocyanate handelt es sich bevorzugt um folgende Verbindungen:
1) Isocyanuratgruppen aufweisende Polyisocyanate von aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und/oder Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,1 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen, jeweils in Anwesenheit von ein-, zwei- oder mehrwertigen, bevorzugt einwertigen Alkoholen, hergestellt werden. Die Urethan- und/oder Allophanatgruppen aufweisenden Polyisocyanate können auch im Gemisch mit anderen Polyisocyanaten, insbesondere den unter 1) genannten, hergestellt werden.
4) Uretonimin-modifizierte Polyisocyanate.
5) Carbodiimid-modifizierte Polyisocyanate.
6) Hyperverzweigte Polyisocyanate, wie sie beispielsweise bekannt sind aus der DE-A1 10013186 oder DE-A1 10013187.
7) Polyurethan-Polyisocyanat-Präpolymere, aus Di- und/oder Polyisocyanaten mit Alkoholen.
8) Polyharnstoff-Polyisocyanat-Präpolymere.
9) Hydrophil modifizierte Polyisocyanate, d.h. Polyisocyanate, die neben den unter 1-10 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche beispielsweise von Phosphorsäure, Phosphonsäure, Schwefelsäure oder Sulfonsäure, bzw. ihren Salzen abgeleitet sind.
10) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.

Bei den Verbindungen (a1) enthält das Polyisocyanat mindestens eine Gruppierung, ausgewählt aus der Gruppe bestehend aus Isocyanuraten, Biureten und Allophanaten, bevorzugt aus der Gruppe bestehend aus Isocyanuraten und Allophanaten, wie beschrieben in der WO 00/39183, was hiermit durch Bezugnahme Bestandteil der vorliegenden Offenbarung sei, besonders bevorzugt handelt es sich um ein isocyanuratgruppenhaltiges Polyisocyanat.

In einer besonders bevorzugten Ausführungsform handelt es sich bei dem Polyisocyanat (a1) um ein Polyisocyanat auf Basis von 1,6-Hexamethylendiisocyanat und/oder Isophorondiisocyanat, ganz besonders bevorzugt auf Basis von Isophorondiisocyanat. Insbesondere handelt es sich bei der Verbindung (a1) um ein Isocyanuratgruppen enthaltendes Polyisocyanat auf Basis von Isophorondiisocyanat.

Bevorzugte Verbindungen (b1) enthalten als Polyisocyanat mindestens eine Gruppierung, ausgewählt aus der Gruppe bestehend aus Isocyanuraten, Biureten und Allophanaten auf Basis von 1,6-Hexamethylendiisocyanat, bevorzugt aus der Gruppe bestehend aus Isocyanuraten und Allophanaten, wie beschrieben in der WO 00/39183, was hiermit durch Bezugnahme Bestandteil der vorliegenden Offenbarung sei, besonders bevorzugt handelt es sich um ein isocyanuratgruppenhaltiges Polyisocyanat auf Basis von 1,6-Hexamethylendiisocyanat.

### Komponenten (a2) und (b2)

Komponenten (a2) und (b2) umfassen jeweils unabhängig voneinander wenigstens eine, beispielsweise ein bis drei, bevorzugt ein bis zwei und ganz besonders bevorzugt genau eine Verbindung mit mindestens einer, bevorzugt genau einer gegenüber Isocyanatgruppen reaktiven Gruppe und mindestens einer radikalisch polymerisierbaren C=C-Doppelbindung.

Bevorzugte Verbindungen der Komponenten (a2) und (b2) sind z. B. die Ester zwei- oder mehrwertiger Alkohole mit α,β-ethylenisch ungesättigen Mono- und/oder Dicarbonsäuren und deren Anhydriden. Als α,β-ethylenisch ungesättigte Mono- und/oder Dicarbonsäuren und deren Anhydride können z. B. Acrylsäure, Methacrylsäure, Fumarsäure, Maleinsäure, Maleinsäureanhydrid, Crotonsäure, Itaconsäure, etc. eingesetzt werden. Bevorzugt werden Acrylsäure und Methacrylsäure, besonders bevorzugt Acrylsäure eingesetzt.

Geeignete Alkohole sind z. B. Diole wie Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Tricyclodecandimethanol.

Geeignete Triole und Polyole weisen z. B. 3 bis 25, bevorzugt 3 bis 18 Kohlenstoffatome auf. Dazu zählen z. B. Trimethylolbutan, Trimethylolpropan, Trimethylolethan, Pentaerythrit, Glycerin, Ditrimethylolpropan, Dipentaerythrit, Ditrimethylolpropan, Sorbit, Mannit, Diglycerol, Threit, Erythrit, Adonit (Ribit), Arabit (Lyxit), Xylit, Dulcit (Galactit), Maltit oder Isomalt.

Vorzugsweise sind die Verbindungen der Komponenten (a2) und (b2) ausgewählt unter 2-Hydroxyethylacrylat, 2-Hydroxyethylmethacrylat, 2-Hydroxypropylacrylat, 2-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, Trimethylolpropanmono- oder -diacrylat, Pentaerythritdi- oder -triacrylat, Dipentaerythritpentaacrylat und Mischungen davon.

Besonders als Verbindungen (a2) oder (b2) bevorzugt sind 2-Hydroxyethylacrylat, 2-Hydroxyethylmethacrylat, 2-Hydroxypropylacrylat, 2-Hydroxypropylmethacrylat, Pentaerythrittriacrylat und Dipentaerythritpentaacrylat.

Bevorzugte Verbindungen (a2) sind 2-Hydroxyethylacrylat, 2-Hydroxyethylmethacrylat, Pentaerythrittriacrylat und Dipentaerythritpentaacrylat, besonders bevorzugt sind 2-Hydroxyethylacrylat und Pentaerythrittriacrylat und ganz besonders bevorzugt ist Pentaerythrittriacrylat.

Bevorzugte Verbindungen (b2) sind 2-Hydroxyethylacrylat, 2-Hydroxyethylmethacrylat und 2-Hydroxypropylacrylat, besonders bevorzugt sind 2-Hydroxyethylacrylat und 2-Hydroxyethylmethacrylat und ganz besonders bevorzugt ist 2-Hydroxyethylacrylat.

### Komponenten a3) und b3)

Bei den optionalen Komponenten a3) und b3) handelt es sich um wenigstens eine Verbindung mit mindestens zwei gegenüber Isocyanatgruppen reaktiven Gruppen, die ausgewählt sind unter Hydroxy-, Mercapto-, primären und/oder sekundären Aminogruppen, bevorzugt Hydroxy- und primäre Aminogruppen, besonders bevorzugt Hydroxygruppen.

Niedermolekulare Alkohole a3) bzw. b3) haben ein Molekulargewicht von nicht mehr als 500 g/mol. Besonders bevorzugt sind Alkohole mit 2 bis 20 Kohlenstoffatomen und beispielsweise 2 bis 6 Hydroxygruppen, bevorzugt 2 bis 4, besonders besonders 2 bis 3 und ganz besonders bevorzugt genau 2 Hydroxygruppen. Bevorzugt sind insbesondere hydrolysestabile kurzkettige Diole mit 4 bis 20, bevorzugt 6 bis 12 Kohlenstoffatomen. Dazu zählen vorzugsweise 1,1-, 1,2-, 1,3- oder 1,4-Di(hydroxymethyl)cyclohexan, 2,2-Bis(4'-hydroxycyclohexyl)propan, 1,2-, 1,3- oder 1,4-Cyclohexandiol, Tetramethylcyclobutandiol, Cyclooctandiol oder Norbornandiol. Besonders bevorzugt werden aliphatische Kohlenwasserstoffdiole, wie die isomeren Butandiole, Pentandiole, Hexandiole, Heptandiole, Octandiole, Nonandiole, Decandiole, Undecandiole und Dodecandiole eingesetzt. Besonders bevorzugt sind 1,2-, 1,3- oder 1,4-Butandiol, 1,4-Pentandiol, 1,5-Pentandiol, 1,6-Hexandiol, 2,5-Hexandiol, Di(hydroxymethyl)cyclohexan Isomere und 2,2-Bis(4'-hydroxycyclohexyl)propan. Ganz besonders bevorzugt handelt es sich bei den Diolen (a3) um cycloaliphatische Diole, insbesondere um 1,1-, 1,2-, 1,3- oder 1,4-Di(hydroxymethyl)cyclohexan, 2,2-Bis(4'-hydroxycyclohexyl)propan, 1,2-, 1,3- oder 1,4-Cyclohexandiol.

### Komponenten a4) und b4)

Geeignete Verbindungen a4) sind weiterhin polymere Polyole bei denen es sich um Polyesterole handelt. Die OH-Zahlen dieser Polymere liegen vorzugsweise in einem Bereich von etwa 20 bis 300 mg KOH/g Polymer.

Bevorzugte Polyesterole sind solche auf Basis von aliphatischen, cycloaliphatischen und/oder aromatischen Di-, Tri- und/oder Polycarbonsäuren mit Di-, Tri- und/oder Polyolen sowie Polyesterole auf Lacton-Basis.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 2000, Poly-1,2-propandiol mit einer Molmasse zwischen 134 und 2000, Polyethylenglykol mit einer Molmasse zwischen 106 und 2000, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bevorzugt handelt es sich bei dem Polyesterol auf Lactonbasis um ein Polycaprolactondiol, bei dem es sich formal um ein Anlagerungsprodukt von Caprolacton an ein Diol HO-R-OH handelt, das die Formel

HO-[-CH₂-CH₂-CH₂-CH₂-CH₂-(CO)-O]ₙ-R-OH oder

HO-[-CH₂-CH₂-CH₂-CH₂-CH₂-(CO)-O]ₙ₁-R-[-O-(CO)-CH₂-CH₂-CH₂-CH₂-CH₂-]ₙ₂-OH

aufweist,
worin
n, n1 und n2 für positive ganze Zahlen stehen, für die gilt n = 1 bis 5 und (n1 + n2) = 1 bis 5 und
R einen zweibindigen aliphatischen oder cycloaliphatischen Rest mit mindestens einem Kohlenstoffatom, bevorzugt 2 bis 20, besonders bevorzugt 2 bis 10, ganz besonders bevorzugt 3 bis 6 Kohlenstoffatomen.

Aliphatische Reste R sind beispielsweise lineares oder verzweigtes Alkylen, z.B. Methylen, 1,2-Ethylen, 1,2- oder 1,3-Propylen, 1,2-, 1,3- oder 1,4-Butylen, 1,1-Dimethyl-1,2-ethylen oder 1,2-Dimethyl-1,2-ethylen, 1,5-Pentylen, 1,6-Hexylen, 1,8-Octylen, 1,10-Decylen, oder 1,12-Dodecylen. Bevorzugt sind 1,2-Ethylen, 1,2- oder 1,3-Propylen, 1,4-Butylen und 1,5-Pentylen, besonders bevorzugt 1,4-Butylen und 1,6-Hexylen.

Denkbar, wenn auch weniger bevorzugt, sind cycloaliphatische Reste, beispielsweise Cyclopropylen, Cyclopentylen, Cyclohexylen, Cyclooctylen und Cyclododecylen.

Bevorzugte Polyesterole als Verbindungen (a4) weisen eine Funktionalität an freien Hydroxygruppen von 2 bis 6, besonders bevorzugt von 2 bis 4, insbesondere von 2 bis 3 und speziell von genau 2 auf.

Geeignete Verbindungen (b4) sind polymere Polyole bei denen es sich um die zuvor im Zusammenhang mit den Verbindungen (a4) beschriebenen Polyesterdiole handelt.

Bevorzugte Verbindungen (b4) sind Polyesterdiole, die ausschließlich aus aliphatischen oder cycloaliphatischen, besonders bevorzugt ausschließlich aus aliphatischen Bausteinen aufgebaut sind. Ganz besonders bevorzugt sind solche Polyesterdiole als Verbindungen (b4), die zumindest teilweise, bevorzugt vollständig Adipinsäure in einpolymerisierter Form als Säurebaustein enthalten und Alkandiole in einpolymerisierter Form als Alkoholbaustein. Insbesondere bevorzugte Verbindungen (b4) sind solche Polyesterdiole, die ein zahlenmittleres Molekulargewicht Mn von mindestens 1500 aufweisen.

### Komponenten (a5) und (b5)

Als Komponenten (a5) und (b5) kommen jeweils unabhängig voneinander Verbindungen mit mindestens einer, beispielsweise ein bis drei, bevorzugt ein oder zwei gegenüber Isocyanat reaktiven Gruppe und mindestens einer, bevorzugt genau einer dispergieraktiven Gruppe in Betracht.

Bei den dispergieraktiven Gruppen handelt es es sich erfindungsgemäß um anionische bzw. in eine anionische Gruppe überführbare Gruppen.

Erfindungsgemäß handelt es sich bei den Verbindungen (a5) und (b5) um solche Verbindungen, die keine polymerisierbare C-C-Bindungen enthalten.

Verbindungen (a5) und (b5) enthalten mindestens eine, bevorzugt 1 bis 3, besonders bevorzugt 1 bis 2, ganz besonders bevorzugt genau eine oder genau 2 gegenüber Isocyanatgruppen reaktive Gruppe und mindestens eine, bevorzugt genau eine anionische oder in eine anionische Gruppe überführbare hydrophile Gruppe. Dabei handelt es sich beispielsweise um solche, wie sie in der EP-A1 703 255, dort besonders von S. 3, Z. 54 bis S. 4, Z. 38, in der DE-A1 197 24 199, dort besonders von S. 3, Z. 4 bis Z. 30, in der DE-A1 40 10 783, dort besonders von Sp. 3, Z. 3 bis Z. 40, in der DE-A1 41 13 160, dort besonders von Sp. 3, Z. 63 bis Sp. 4, Z. 4 und in der EP-A2 548 669, dort besonders von S. 4, Z. 50 bis S. 5, Z. 6 beschrieben sind. Auf diese Schriften wird im Rahmen der vorliegenden Offenbarung hiermit ausdrücklich Bezug genommen.

Bevorzugte Verbindungen (a5) und (b5) sind solche mit der allgemeinen Formel

RG-R⁹-DG

worin
RG mindestens eine gegen Isocyanat reaktive Gruppe bedeutet,
DG mindestens eine dispergieraktive Gruppe und
R⁹ einen 1 bis 20 Kohlenstoffatome enthaltenden aliphatischen, cycloaliphatischen oder aromatischen Rest.

Beispiele für gegenüber Isocyanat reaktiven Gruppen RG sind -OH, -SH, -NH₂ oder -NHR¹⁰, worin R¹⁰ C₁ bis C₄-Alkyl bedeuten kann, beispielsweise Methyl, Ethyl, isoPropyl, n-Propyl, n-Butyl, iso-Butyl, sek-Butyl, tert-Butyl, bevorzugt Methyl, Ethyl, n-Butyl oder tert.-Butyl, besonders bevorzugt Methyl oder n-Butyl und ganz besonders bevorzugt Methyl, bevorzugt sind -OH, -NH₂ oder -NHR¹⁰, besonders bevorzugt sind -OH oder -NH₂, und ganz besonders bevorzugt ist -OH.

Beispiele für DG sind -COOH, -SO₃H oder -PO₃H sowie deren anionischen Formen, denen ein beliebiges Gegenion assoziiert sein kann, z.B. Li⁺, Na⁺, K⁺, Cs⁺, Mg²⁺, Ca²⁺ oder Ba²⁺. Weiterhin können als Gegenion die von Ammoniak oder Aminen, insbesondere tertiären Aminen, abgeleiteten Ammoniumionen oder quartäre Ammoniumionen, wie z.B. Ammonium, Methylammonium, Dimethylammonium, Trimethylammonium, Ethylammonium, Diethylammonium, Triethylammonium, Tributylammonium, Di-isoPropyl-ethyl-ammonium, Benzyldimethylammonium, Monoethanolammonium, Diethanolammonium, Triethanolammonium, Hydroxyethyl-Dimethylammonium, Hydroxyethyl-Diethylammonium, Monopropanolammonium, Dipropanolammonium, Tripropanolammonium, Piperidinium, Piperazinium, N,N'-Dimethylpiperazinium, Morpholinium, Pyridinium, Tetramethylammonium, Triethylmethylammonium, 2-Hydroxyethyl-Trimethylammonium, Bis-(2-Hydroxyethyl)-dimethylammonium, Tris-(2-Hydroxyethyl)-methylammonium, als Gegenion assoziiert sein.

R⁹ ist bevorzugt Methylen, 1,2-Ethylen, 1,2-Propylen, 1,3-Propylen, 1,2-Butylen, 1,4-Butylen, 1,3-Butylen, 1,6-Hexylen, 1,8-Octylen, 1,12-Dodecylen, 1,2-Phenylen, 1,3-Phenylen, 1,4-Phenylen, 1,2-Naphthylen, 1,3-Naphthylen, 1,4-Naphthylen, 1,6-Naphthylen, 1,2-Cyclopentylen, 1,3-Cyclopentylen, 1,2-Cyclohexylen, 1,3-Cyclohexylen oder 1,4-Cyclohexylen.

Bevorzugt handelt es sich bei der Komponente (a5) und (b5) unabhängig voneinander z.B. um Hydroxyessigsäure, Weinsäure, Milchsäure, 3-Hydroxypropionsäure, Hydroxypivalinsäure, Dimethylolpropionsäure, Dimethylolbuttersäure, Trimethylolessigsäure, Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxybernsteinsäure, Hydroxydecansäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-alkylierte oder N-cycloalkylierte Aminopropan- oder -ethansulfonsäuren, beispielsweise N-Cyclohexylaminoethansulfonsäure oder N-Cyclohexylaminopropansulfonsäure, sowie deren Alkali-, Erdalkali- oder Ammoniumsalze und besonders bevorzugt um die genannten Di- und Monohydroxycarbonsäuren.

Zur Herstellung der Dispersion werden die vorgenannten Säuren, falls es sich nicht schon um Salze handelt, teilweise oder vollständig neutralisiert, bevorzugt mit Alkalisalzen oder Aminen, bevorzugt tertiären Aminen.

Bevorzugte tert. Amine sind Triethylamin, Tri-n-butylamin, Benzyldimethylamin, Dimethylethanolamin, N-Methyl diethanolamin, N-Methylmorpholin und Ethyl diisopropyl-amin.

Bevorzugt werden 10 bis 100 mol% der in den Verbindungen (a5) und (b5) enthaltenen Säuregruppen, bevorzugt Carboxygruppen, neutralisiert, besonders bevorzugt 40 bis 100 mol% und ganz besonders bevorzugt 60 bis 100 mol%.

In einer bevorzugten Ausführungsform werden die Verbindungen (a5) bzw. (b5) in ihrer aziden, d.h. protonierten Form in die Polyurethane eingebaut und erst nach Abschluß der Herstellung der Polyurethane, jedoch vor oder während, bevorzugt vor der Dispergierung in Wasser neutralisiert.

Bevorzugt als Verbindungen (a5) und (b5) sind unabhängig voneinander Dimethylolpropionsäure, Glykolsäure und Thioglykolsäure.

Besonders bevorzugt als Verbindung (a5) sind Glykolsäure und Thioglykolsäure.

Besonders bevorzugt als Verbindung (b5) ist Dimethylolpropionsäure.

### Komponenten (a6) und (b6)

In den erfindungsgemäßen Polyurethanen, bzw. Polyurethandispersionen können als optionale Komponenten (a6) und (b6) wenigstens eine weitere Verbindung mit genau einer gegenüber Isocyanatgruppen reaktiven Gruppe eingesetzt werden. Bei dieser Gruppe kann es sich um eine Hydroxy-, Mercapto-, oder eine primäre oder sekundäre Aminogruppe handeln. Geeignete Verbindungen (a6)/(b6) sind die üblichen, dem Fachmann bekannten Verbindungen, die als sogenannte Abstopper zur Herabsetzung der Zahl reaktiver freier Isocyanatgruppen bzw. zur Modifizierung der Polyurethaneigenschaften üblicherweise bei der Polyurethanherstellung eingesetzt werden. Dazu zählen z. B. monofunktionelle Alkohole, wie Methanol, Ethanol, n-Propanol, Isopropanol, n-Butanol etc. Geeignete Komponenten (a6) und (b6) sind auch Amine mit einer primären oder sekundären Aminogruppe, wie z. B. Methylamin, Ethylamin, n-Propylamin, Diisopropylamin, Dimethylamin, Diethylamin, Di-n-propylamin, Diisopropylamin etc.

### Komponenten (a7) und (b7)

In den erfindungsgemäßen Polyurethanen bzw. Polyurethandispersionen kann als optionale Komponenten (a7) und (b7) wenigstens ein von den eingebauten Verbindungen der Komponenten (a1) und (b1) verschiedenes Di- oder Polyisocyanat eingesetzt werden. Bevorzugt werden als Komponenten (a7) und (b7) keine Polyisocyanate eingesetzt, bei denen die Isocyanatgruppen mit einem Blockierungsmittel umgesetzt wurden.

Bevorzugte Verbindungen (a7) und (b7) sind Di- oder Polyisocyanate mit einer NCO-Funktionalität von 2 bis 4,5, besonders bevorzugt 2 bis 3,5. Bevorzugt werden als Komponente (a7) und (b7) aliphatische, cycloaliphatische und araliphatische Diisocyanate eingesetzt. Dies können beispielsweise die oben unter (a1) und (b1) aufgeführten Diisocyanate sein, sind jedoch von der im Polyurethan tatsächlich eingesetzten Verbindung (a1) und (b1) verschieden. Bevorzugt sind Verbindungen (a7) und (b7), die neben 2 oder mehreren Isocyanatgruppen noch eine Gruppe, ausgewählt aus der Gruppe der Urethan-, Harnstoff-, Biuret-, Allophanat-, Carbodiimid-, Urethonimin-, Uretdion- und Isocyanuratgruppen aufweisen.

Dies sind beispielsweise die oben unter (a1) und (b1) beschriebenen, mit den Nummern 1) bis 10) bezeichneten Polyisocyanat oder deren Gemische sein.

Bevorzugt werden als Komponente (a7) und (b7) 1,6-Hexamethylendiisocyanat, I-sophorondiisocyanat, 1,3- und 1,4-Bis(isocyanatomethyl)cyclohexan, deren Isocyanurate, Biurete und Mischungen davon eingesetzt.

Enthalten die erfindungsgemäßen Dispersionen neben der Komponente (a1) und (b1) noch eine Komponente (a7) und/oder (b7), so beträgt der Anteil der Verbindungen der Komponente (a7) bzw. (b7) vorzugsweise 0,1 bis 90 Gew.-%, besonders bevorzugt 1 bis 50 Gew.-%, insbesondere 5 bis 30 Gew.-%, bezogen auf die Gesamtmenge der Verbindungen der Komponenten (a1) und (a7) bzw. (b1) und (b7).

In einer bevorzugten Ausführungsform wird neben den Komponenten (a1) und (b1) keine weitere Komponente (a7) und (b7) in die Polyurethane (A) bzw. (B) eingebaut.

### Komponente (C)

Die erfindungsgemäße Mischung der Polyurethane (A) und (B) kann optional wenigstens eine weitere Verbindung (C) enthalten, wie sie üblicherweise als Reaktivverdünner eingesetzt wird. Dazu zählen z. B. die Reaktivverdünner, wie sie in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 beschrieben sind.

Die Komponente (C) wird zusammen mit den Polyurethanen (A) und (B) in Wasser dispergiert.

Bevorzugte Reaktivverdünner sind von der Komponente (a2) bzw. (b2) verschiedene Verbindungen, die wenigstens eine radikalisch polymerisierbare C=C-Doppelbindungen aufweisen.

Reaktivverdünner sind beispielsweise Ester der (Meth)acrylsäure mit Alkoholen, die 1 bis 20 C-Atome aufweisen, z.B. (Meth)acrylsäuremethylester, (Meth)acrylsäureethylester, (Meth)acrylsäurebutylester, (Meth)acrylsäure-2-ethylhexylester, 2-Hydroxyethylacrylat, 4-Hydroxybutylacrylat, Dihydrodicyclopentadienylacrylat, Vinylaromatische Verbindungen, z.B. Styrol, Divinylbenzol, α,β-ungesättigte Nitrile, z.B. Acrylnitril, Methacrylnitril, α,β-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkyl-carbonsäureamide oder N-Vinylcarbonsäureamide, wie z. B. N-Vinylacetamid, N-Vinyl-N-methylformamid und N-Vinyl-N-methylacetamid oder Vinylether, z.B. Methylvinylether, Ethylvinylether, n-Propylvinylether, iso-Propylvinylether, n-Butylvinylether, sek-Butylvinylether, isoButylvinylether, tert-Butylvinylether, 4-Hydroxybutylvinylether, sowie Gemische davon.

Verbindungen mit mindestens zwei radikalisch polymerisierbare C=C-Doppelbindungen: Dazu zählen insbesondere die Diester und Polyester der zuvorgenannten α,β-ethylenisch ungesättigten Mono- und/oder Dicarbonsäuren mit Diolen oder Polyolen. Besonders bevorzugt sind Hexandioldiacrylat, Hexandioldimethacrylat, Octandioldiacrylat, Octandioldimethacrylat, Nonandioldiacrylat, Nonandioldimethacrylat, Decandioldiacrylat, Decandioldimethacrylat, Pentaerythritdiacrylat, Dipentaerythrittetraacrylat, Dipentaerythrittriacrylat, Pentaerythrittetraacrylat, etc. Bevorzugt sind auch die Ester alkoxylierter Polyole, mit α,β-ethylenisch ungesättigten Mono- und/oder Dicarbonsäuren wie z. B. die Polyacrylate oder -methacrylate von alkoxyliertem Trimethylolpropan, Glycerin oder Pentaerythrit. Geeignet sind weiterhin die Ester alicylischer Diole, wie Cyclohexandioldi(meth)acrylat und Bis(hydroxymethylethyl)cyclohexan-di(meth)acrylat. Weitere geeignete Reaktivverdünner sind Trimethylolpropanmonoformalacrylat, Glycerinformalacrylat, 4-Tetrahydropyranylacrylat, 2-Tetrahydropyranyl-methacrylat und Tetrahydrofurfurylacrylat.

Weitere geeignete Reaktivverdünner sind beispielsweise Urethan(meth)acrylate, Epoxy(meth)acrylate,Polyether(meth)acrylate, Polyester(meth)acrylate oder Polycarbonat(meth)acrylate.

### Urethan(meth)acrylate

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen.

Derartige Urethan(meth)acrylate enthalten als Aufbaukomponenten im Wesentlichen:
(1) mindestens ein organisches aliphatisches, aromatisches oder cycloaliphatisches Di- oder Polyisocyanat, wie beispielsweise die oben unter (a1) und (b1) aufgeführten
(2) mindestens eine Verbindung mit mindestens einer gegenüber Isocyanat reaktiven Gruppe und mindestens einer radikalisch polymerisierbaren ungesättigten Gruppe, wie beispielsweise die unter (a2) und (b2) aufgeführten, und
(3) gegebenenfalls mindestens eine Verbindung mit mindestens zwei gegenüber Isocyanat reaktiven Gruppen wie beispielsweise die unter (a3) und (b3) aufgeführten.

Die Komponenten (1), (2) und (3) können die gleichen sein, wie oben für die erfindungsgemäßen Polyurethane (A) und (B) beschrieben.

Die Urethan(meth)acrylate haben vorzugsweise ein zahlenmittleres Molgewicht Mₙ von 500 bis 20 000, insbesondere von 500 bis 10 000 besonders bevorzugt 600 bis 3000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Besonders bevorzugte Urethan(meth)acrylate weisen eine mittlere OH-Funktionalität von 1,5 bis 4,5 auf.

### Epoxid(meth)acrylate

Epoxid(meth)acrylate sind bevorzugt erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, iso-Butylenoxid, 1-Butenoxid, 2-Butenoxid, Vinyloxiran, Styroloxid oder Epichlorhydrin, bevorzugt sind Ethylenoxid, Propylenoxid, iso-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-E-poxypropoxy)phenyl]octahydro-4,7-methano-5H-inden) (CAS-Nr. [13446-85-0]), Tris[4-(2,3-epoxypropoxy)phenyl]methan Isomere)CAS-Nr. [66072-39-7]), Phenol basierte Epoxy Novolake (CAS-Nr. [9003-35-4]) und Kresol basierte Epoxy Novolake (CAS-Nr. [37382-79-9]).

Bevorzugt sind Bisphenol-A-diglycidylether, Bisphenol-F-diglycidylether, Bisphenol-B-diglycidylether, Bisphenol-S-diglycidylether, besonders bevorzugt ist Bisphenol-A-diglycidylether.

Aliphatische Glycidylether sind beispielsweise 1,4-Butandioldiglycidether, 1,6-Hexan-dioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Bevorzugt sind 1,4-Butandioldiglycidether, 1,6-Hexandioldiglycidylether, Trimethylolpropantriglycidylether, Pentaerythrittetraglycidylether und (2,2-bis[4-(2,3-epoxy-propoxy)cyclohexyl]propan.

Besonders bevorzugt sind die oben erwähnten aromatischen Glycidylether.

Die Epoxid(meth)acrylate und -vinylether haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

Bevorzugte Epoxid(meth)acrylate weisen eine OH-Zahl von 40 bis 400 mg KOH/g auf.

Bevorzugte Epoxid(meth)acrylate weisen eine mittlere OH-Funktionalität von 1,5 bis 4,5 auf.

Besonders bevorzugte Epoxid(meth)acrylate sind solche, wie sie aus Verfahren erhalten werden gemäß EP-A-54 105, DE-A 33 16 593, EP-A 680 985 und EP-A-279 303, bei denen in einer ersten Stufe ein (Meth)acrylsäureester aus (Meth)acrylsäure und Hydroxyverbindungen hergestellt wird und in einer zweiten Stufe überschüssige (Meth)acrylsäure mit Epoxiden umgesetzt wird.

### Polyester(meth)acrylate

Als Polyester(meth)acrylate kommen zumindest teilweise oder bevorzugt vollständig (meth)acrylierte Umsetzungsprodukte solcher Polyesterole in Betracht, wie sie oben unter den Verbindungen (a4) aufgeführt sind.

### Carbonat(meth)acrylate

Carbonat(meth)acrylate enthalten im Mittel vorzugsweise 1 bis 5, insbesondere 2 bis 4, besonders bevorzugt 2 bis 3 (Meth)acrylgruppen und ganz besonders bevorzugt 2 (Meth)acrylgruppen.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)-acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem Hydroxygruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 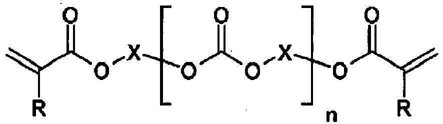 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

Dazu zählen weiterhin auch übliche, dem Fachmann bekannte Polycarbonate mit endständigen Hydroxygruppen, die z. B. durch Umsetzung der zuvor genannten Diole mit Phosgen oder Kohlensäurediestern erhältlich sind.

### Polyether(meth)acrylate

Bevorzugt handelt es sich bei Polyether(meth)acrylaten um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Darüberhinaus kann ein- bis zwanzigfach und besonders bevorzugt drei- bis zehnfach ethoxyliertes, propoxyliertes oder gemischt ethoxyliertes und propoxyliertes und insbesondere ausschließlich ethoxyliertes Glycerin eingesetzt werden.

Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyestepolyolenacrylate, Polyetherolacrylate und Triacrylat von ein- bis zwanzigfach alkoxyliertem, besonders bevorzugt ethoxyliertem Trimethylolpropan.

Polyether(meth)acrylate können ferner (Meth)acrylate von Poly-THF mit einem Molgewicht zwischen 162 und 2000, Poly-1,3-propandiol mit einem Molgewicht zwischen 134 und 2000 oder Polyethylenglykol mit einem Molgewicht zwischen 238 und 2000 sein.

Sofern die Aushärtung der erfindungsgemäßen Dispersionen nicht mit Elektronenstrahlen, sondern mittels UV-Strahlung erfolgt, enthalten die erfindungsgemäßen Zubereitungen vorzugsweise wenigstens einen Photoinitiator, der die Polymerisation ethylenisch ungesättigter Doppelbindungen initiieren kann.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen solche Photoinitiatoren, wie sie beschrieben sind in WO 2006/005491 A1, Seite 21, Zeile 18 bis Seite 22, Zeile 2 (entspricht US 2006/0009589 A1, Absatz [0150]), was hiermit durch Bezugnahme Bestandteil der vorliegenden Offenbarung sei.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethyl-pentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentyl-phosphinoxid und 1-Hydroxy-cyclohexyl-phenylketon, 2,4,6-Trimethylbenzoyl-diphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Hydroxy-cyclohexyl-phenylketon, 1-Benzoylcyclohexan-1-ol, 2-Hydroxy-2,2-dimethylacetophenon, 2,2-Dimethoxy-2-phenylacetophenon und deren Gemische.

Die erfindungsgemäßen Dispersionen enthalten die Photoinitiatoren vorzugsweise in einer Menge von 0,05 bis 10 Gew.-%, besonders bevorzugt 0,1 bis 8 Gew.-%, insbesondere 0,2 bis 5 Gew.-%, bezogen auf die Gesamtmenge der Polyurethane (A) und (B).

Die erfindungsgemäßen Dispersionen können weitere Lack-übliche Zusatzstoffe, wie Verlaufsmittel, Entschäumer, UV-Absorber, sterisch gehinderte Amine (HALS), Weichmacher, Antiabsetzmittel, Farbstoffe, Pigmente, Antioxidantien, Aktivatoren (Beschleuniger), antistatische Agentien, Flammschutzmittel, Verdicker, thixotrope Agentien, oberflächenaktive Agentien, Viskositätsmodifikatoren, Plastifizierer oder Chelatbildner und/oder Füllstoffe enthalten.

Die erfindungsgemäßen Polyurethane (A) und (B) können bezogen auf die Summe der Verbindungen (A) und (B) 0 bis 10 Gew% mindestens eines UV Stabilisators enthalten.

Geeignete Stabilisatoren umfassen typische UV-Absorber wie Oxanilide, Triazine, bevorzugt Hydroxyphenyltriazin, und Benzotriazol (letztere erhältlich als Tinuvin® - Marken der Ciba-Spezialitätenchemie) und Benzophenone.

Diese können allein oder zusammen mit bezogen auf die Summe der Verbindungen (A) und (B) zusätzlich 0 bis 5 Gew% an geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat oder bevorzugt Bis(1,2,2,6,6-pentamethyl-4-piperidyl)sebacat, eingesetzt werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Di-iso-propylpercarbonat, tert-Butylperoktoat oder Benzpinakol, sowie beispielsweise solche thermisch aktivierbare Initiatoren, die eine Halbwertszeit bei 80 °C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Di-ketone verwendet werden.

Geeignete Füllstoffe umfassen Silikate, z. B. durch Hydrolyse von Siliciumtetrachlorid erhältliche Silikate wie Aerosil R der Fa. Degussa, Kieselerde, Talkum, Aluminiumsilikate, Magnesiumsilikate, Calciumcarbonate etc. Geeignete Stabilisatoren umfassen typische UV-Absorber wie Oxanilide, Triazine und Benzotriazol (letztere erhältlich als Tinuvin R-Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-% bezogen auf die in der Zubereitung enthaltenen "festen" Komponenten eingesetzt.

Die erfindungsgemäßen Mischungen der Polyurethane (A) und (B) können in Form ihrer wässrigen Dispersionen bei einem Feststoffgehalt in einem Bereich von etwa 5 bis 70, insbesondere 20 bis 50 Gew.-% vorliegen.

Die erfindungsgemäßen Polyurethane (A) sind in der Regel pro 100 mol% reaktive Isocyanatgruppen in (a1) und (a7) (in Summe) wie folgt zusammengesetzt:
(a2) 30 bis 95 mol%, bevorzugt 40 bis 92 mol%, besonders bevorzugt 50 bis 90 mol%, ganz besonders bevorzugt 60 bis 80 mol% und insbesondere 70 bis 80 mol%,
(a3) 0 bis 30 mol%, bevorzugt 0 bis 25 mol%, besonders bevorzugt 0 bis 20 mol%, ganz besonders bevorzugt 0 bis 15 mol%, insbesondere 0 bis 10 mol% und speziell 0%,
(a4) 0 bis 10 mol%, bevorzugt 0 bis 8 mol%, besonders bevorzugt 0 bis 5 mol%, ganz besonders bevorzugt 0 bis 3 mol% und insbesondere 0 mol%,
(a5) 5 bis zu 30 mol%, bevorzugt 8 bis 25 mol%, besonders bevorzugt 10 bis 20 mol%, ganz besonders bevorzugt 15 bis 20 mol% und insbesondere 18 bis 20 mol%,
(a6) bis zu 10 mol%, bevorzugt bis zu 8 mol%, besonders bevorzugt bis zu 5 mol%, ganz besonders bevorzugt bis zu 2 mol% und insbesondere 0 mol%,
jeweils bezogen auf die gegenüber Isocyanat reaktiven Gruppen,
mit der Maßgabe, daß die Summe aller gegenüber Isocyanat reaktiven Gruppen 80 bis 125 mol% der reaktiven Isocyanatgruppen in (a1) und (a7) (in Summe) beträgt, bevorzugt 85 bis 115 mol%, besonders bevorzugt 90 bis 110 mol%, ganz besonders bevorzugt 95 bis 105 mol% und insbesondere 100 mol%.

Das Verhältnis von (a1) zu (a7) bezogen auf die reaktiven Isocyanatgruppen beträgt in der Regel 1 : 0 bis 1 : 2, bevorzugt 1 : 0 bis 1 : 1,5, besonders bevorzugt 1 : 0 bis 1 : 1,2, ganz besonders bevorzugt 1 : 0 bis 1 : 1, insbesondere 1 : 0 bis 1 : 0,5 und speziell 1 : 0.

Die erfindungsgemäßen Polyurethane (B) sind in der Regel pro 100 mol% reaktive Isocyanatgruppen in (b1) und (b7) (in Summe) wie folgt zusammengesetzt:
(b2) 30 bis 90 mol%, bevorzugt 40 bis 85 mol%, besonders bevorzugt 50 bis 80 mol%, ganz besonders bevorzugt 60 bis 80 mol% und insbesondere 70 bis 80 mol%,
(b3) 0 bis 30 mol%, bevorzugt 0 bis 25 mol%, besonders bevorzugt 0 bis 20 mol%, ganz besonders bevorzugt 0 bis 15 mol%, insbesondere 0 bis 10 mol% und speziell 0%,
(b4) 10 bis 40 mol%, bevorzugt 15 bis 35 mol%, besonders bevorzugt 20 bis 30 mol% und ganz besonders bevorzugt 20 bis 25 mol%,
(b5) 5 bis zu 30 mol%, bevorzugt 8 bis 25 mol%, besonders bevorzugt 10 bis 20 mol%, ganz besonders bevorzugt 15 bis 20 mol% und insbesondere 18 bis 20 mol%,
(b6) bis zu 10 mol%, bevorzugt bis zu 8 mol%, besonders bevorzugt bis zu 5 mol%, ganz besonders bevorzugt bis zu 2 mol% und insbesondere 0 mol%,
jeweils bezogen auf die gegenüber Isocyanat reaktiven Gruppen,
mit der Maßgabe, daß die Summe aller gegenüber Isocyanat reaktiven Gruppen 80 bis 125 mol% der reaktiven Isocyanatgruppen in (b1) und (b7) (in Summe) beträgt, bevorzugt 85 bis 115 mol%, besonders bevorzugt 90 bis 110 mol%, ganz besonders bevorzugt 95 bis 105 mol% und insbesondere 100 mol%.

Das Verhältnis von (b1) zu (b7) bezogen auf die reaktiven Isocyanatgruppen beträgt in der Regel 1 : 0 bis 1 : 2, bevorzugt 1 : 0 bis 1 : 1,5, besonders bevorzugt 1 : 0 bis 1 : 1,2, ganz besonders bevorzugt 1 : 0 bis 1 : 1, insbesondere 1 : 0 bis 1 : 0,5 und speziell 1 : 0.

Das zahlenmittlere Molekulargewicht Mₙ der erfindungsgemäßen Polyurethane (A) und (B), bestimmt durch Gelpermeationschromatographie mit Tetrahydrofuran als Elutionsmittel und Polystyrol als Standard, kann beispielsweise bis zu 50000, bevorzugt bis zu 30000, besonders bevorzugt bis zu 10000 und insbesondere bis zu 5000 betragen. Es stellt eine bevorzugte Ausführungsform der vorliegenden Erfindung dar, wenn das Polyurethan (B) ein höheres zahlenmittleres Molekulargewicht aufweist, als das Polyurethan (A). So weist das Polyurethan (B) bevorzugt ein zahlenmittleres Molekulargewicht bis zu 5000 g/mol aus und das Polyurethan (A) bis zu 2000 g/mol.

Der Gehalt an Isocyanatgruppen, berechnet als NCO mit dem Molekulargewicht 42 g/mol beträgt bei den erfindungsgemäßen Polyurethanen bis zu 5 Gew%, bevorzugt bis zu 3 Gew%, besonders bevorzugt bis zu 2 Gew%, ganz besonders bevorzugt bis zu 1 Gew% und insbesondere bis zu 0,5 Gew%. Falls blockierte Isocyanatgruppen enthalten sind, so werden diese in den Gehalt an Isocyanatgruppen mit einberechnet.

Das Polyurethan (A) weist ein Glasübergangstemperatur von mehr als 20 °C, bevorzugt mehr als 25 °C auf.

Das Polyurethan (B) weist ein Glasübergangstemperatur von nicht mehr als 10 °C, bevorzugt nicht mehr als 0 °C auf. Die Glasübergangstemperatur Tg wird mit der DSC-Methode (Differential Scanning Calorimetry) gemäß ASTM 3418/82 mit einer Aufheizrate von 10 °C/min bestimmt.

Zur Herstellung der erfindungsgemäßen Polyurethane werden die Ausgangskomponenten (a1) bis (a7) bzw. (b1) bis (b7), soweit eingesetzt, bei Temperaturen von 40 bis 180°C, vorzugsweise 50 bis 150°C, unter Einhaltung des oben angegebenen NCO-/OH-Äquivalentverhältnisses miteinander umgesetzt.

Die Umsetzung erfolgt in der Regel solange, bis die gewünschte NCO-Zahl gemäß DIN 53185 erreicht ist.

Die Reaktionsdauer beträgt in der Regel 10 min bis 12 Stunden, bevorzugt 15 min bis 10 Stunden, besonders bevorzugt 20 min bis 8 Stunden und ganz besonders bevorzugt 1 bis 8 Stunden.

Zur Beschleunigung der Reaktion können gegebenenfalls geeignete Katalysatoren eingesetzt werden.

Die Bildung des Addukts aus isocyanatgruppenhaltiger Verbindung und der Verbindung, die gegenüber Isocyanatgruppen reaktive Gruppen enthält, erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, besonders bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird zunächst die isocyanatgruppenhaltige Verbindung (a1) bzw. (b1) vorgelegt, daraufhin (a2) bzw. (b2) und anschließend (a5) bzw. (b5) zugegeben oder bevorzugt zunächst die isocyanatgruppenhaltige Verbindung (a1) bzw. (b1) vorgelegt, daraufhin (a5) bzw. (b5) und anschließend (a2) bzw. (b2) zugegeben. Nachfolgend können gegebenenfalls gewünschte weitere Komponenten zugegeben werden.

Selbstverständlich können (a2) bzw. (b2) und (a5) bzw. (b5) auch im Gemisch miteinander zugegeben werden.

Zur Herstellung der Polyurethandispersion wird das hergestellte Polyurethan mit Wasser vermischt. Bevorzugt wird in einem ersten Schritt die organische Phase homogen hergestellt und in einem zweiten Schritt diese organische Phase in eine Wasserphase gegeben oder eine Wasserphase in die so hergestellte organische Phase gegeben.

In der so hergestellten Dispersion ist die mittlere Teilchengröße (z-Mittelwert), gemessen mittels dynamischer Lichtstreuung mit dem Malvern® Autosizer 2 C, im Allgemeinen <1000 nm, bevorzugt <500 nm und besonders bevorzugt < 100 nm. Im Normalfall beträgt der Durchmesser 20 bis 80 nm.

Zur Erzeugung der Emulsion ist in der Regel ein Energieeintrag von nicht mehr als 10⁸ W/m³ erforderlich.

Die erfindungsgemäßen Dispersionen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und insbesondere von Metallen oder beschichteten Metallen.

Vorteilhafterweise bilden die erfindungsgemäßen Dispersionen nach Härtung durch energiereiche Strahlung Filme mit guten anwendungstechnischen Eigenschaften, wie eine gute Kratzbeständigkeit, gute Chemikalienfestigkeit, gute Witterungsstabilität und/oder gute mechanische Eigenschaften aus.

Die Beschichtung der Substrate erfolgt nach üblichen, dem Fachmann bekannten Verfahren, wobei man wenigstens eine erfindungsgemäße Dispersion auf das zu beschichtende Substrat in der gewünschten Stärke aufbringt und die flüchtigen Bestandteile der Dispersionen entfernt: Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Zur Entfernung des in der Dispersion enthaltenen Wassers wird nach dem Aufbringen auf das Substrat getrocknet, beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5µm, bevorzugt von 900 bis 1500 nm bezeichnet ist.

Gegebenenfalls kann, wenn mehrere Schichten des Beschichtungsmittels übereinander aufgetragen werden, nach jedem Beschichtungsvorgang eine Strahlungshärtung erfolgen.

Die Strahlungshärtung erfolgt durch Einwirkung energiereicher Strahlung, also UV-Strahlung oder Tageslicht, vorzugsweise Licht der Wellenlänge 250 bis 600 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid oder Verbrennungsgase. Des Weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Diesen unterschiedlichen zeitlichen Verlauf der Härtung kann man sich insbesondere dann zu Nutze machen, wenn sich an die Beschichtung des Gegenstandes noch ein Verarbeitungsschritt anschließt, bei dem die Filmoberfläche in direkten Kontakt mit einem anderen Gegenstand tritt oder mechanisch bearbeitet wird.

Der Vorteil der erfindungsgemäßen Dispersionen liegt darin, dass man die beschichteten Gegenstände unmittelbar im Anschluß an die Strahlungshärtung weiterverarbeiten kann, weil die Oberfläche nicht mehr klebt. Andererseits ist der getrocknete Film noch so flexibel und dehnbar, dass der Gegenstand noch verformt werden kann, ohne dass der Film dabei abplatzt oder reißt.

Ein weiterer Gegenstand der Erfindung ist die Verwendung einer Dispersion, wie zuvor beschrieben, zur Beschichtung von Substraten aus Metall, Holz, Papier, Keramik, Glas, Kunststoff, Textil, Leder, Vlies oder mineralischen Baustoffen.

Die die erfindungsgemäßen Polyurethandispersionen können insbesondere als Grundierungen, Füller, pigmentierte Decklacke und Klarlacke im Bereich Industrie-, insbesondere Flugzeug- oder Großfahrzeuglackierung, Holz-, Auto-, insbesondere OEM- oder Autoreparaturlackierung, oder Dekolackierung eingesetzt werden. Besonders geeignet sind die Beschichtungsmittel für Anwendungen, in denen eine besonders hohe Applikationssicherheit, Außenwitterungsbeständigkeit, Optik, Lösemittel- und/oder Chemikalienfestigkeit sowie Kratzbeständigkeit gefordert werden.

Die Erfindung wird anhand der folgenden, nicht einschränkenden Beispiele näher erläutert.

### Beispiele

Soweit nicht anders angegeben, beziehen sich angegebene Teile und Prozente auf das Gewicht.

### Beispiel 1:

### Herstellung einer Dispersion

300 Teile eines biuretgruppenhaltigen Polyisocyanats auf Basis Hexamethylendiisocyanat (Basonat® HB 100 der Fa. BASF SE, Ludwigshafen): Polyisocyanat (Biuret) auf Basis von Hexamethylendiisocyanat mit einem NCO-Gehalt gemäß DIN EN ISO 11909 von 22 - 23%), 332 Teile Pentaerythrit-triacrat, 73 Teile Hydroxyethylacrylat, 75 Teile Aceton, 0,4 Teile Kerobit ®TBK und 0,2 Teile Dibutylzinndilaurat werden in einem Dreihalskolben 3 Stunden bei 65°C gerührt, dann gibt man 15 Teile Glykolsäure zu und rührt weitere 3 Stunden bei 65°C. Anschließend gibt man weitere 135 Teile Pentaerythrit-triacrat zu und rührt weitere 3 Stunden bei 65°C. Danach neutralisiert man mit 20 Teilen Triethylamin und tropft innerhalb 90 Minuten bei 60-70°C 1300 Teile Wasser zu. Anschließend destilliert man das Aceton ab. Die Teilchengröße der Dispersion, gemessen nach 2 Wochen mit einem Malvern Teilchengrößenmeßgerät, beträgt 167 nm.

### Beispiel 2:

### Herstellung einer Dispersion

368 Teile eines eines biuretgruppenhaltigen Polyisocyanats auf Basis Hexamethylendiisocyanat (Basonat® HB 100), 98 Teile Hydroxyethylacrylat, 32 Teile eines Polyesterdiols, aufgebaut aus Adipinsäure- und 1,4-Butandioleinheiten, OH Zahl zwischen 108 und 116 mgKOH/g, Molekulargewicht ca. 1000 g/mol, 120 Teile Aceton, 0,5 Teile Kerobit TBK und 0,2 Teile Dibutylzinndilaurat werden in einem Dreihalskolben 1 Stunde bei 75°C gerührt, dann gibt man 551 Teile Pentaerythrit-triacrat und 16 Teile Glykolsäure zu und rührt weitere 4 Stunden bei 75°C. Danach neutralisiert man mit 21 Teilen Triethylamin und tropft innerhalb 90 Minuten bei 60-70°C 1800 Teile Wasser zu. Anschließend destilliert man das Aceton ab. Die Teilchengröße der Dispersion, gemessen mit einem Malvern Teilchengrößenmeßgerät, beträgt 125 nm.

### Beispiel 3:

### Herstellung der Dispersion

233 Teile des eines Isocyanurats (Vestanat® T 1890 der Fa. Evonik) auf Basis von Isophorondiisocyanat mit einem NCO-Gehalt gemäß DIN EN ISO 11909 von 11,7 - 12,3% werden mit 49 Teilen Hydroxyethylacrylat, 0,3 Teilen Kerobit® TBK, 120 Teilen Aceton und 0,4 Teilen Dibutylzinndilaurat bei Raumtemperatur gemischt und dann 1,5 Stunden bei 65°C gerührt, dann gibt man 280 Teile Pentaerythrit-triacrat und 8 Teile Glykolsäure zu und rührt weitere 8 Stunden bei 80°C, bzw. bis der NCO Wert auf < 0,15% gefallen ist. Danach neutralisiert man mit 11 Teilen Triethylamin und tropft innerhalb 90 Minuten bei 60-70°C 1000 Teile Wasser zu.

Anschließend destilliert man das Aceton ab. Die Teilchengröße der Dispersion beträgt 275 nm.

### Beispiel 4:

### Herstellung einer Dispersion

20 Teile des Isocyanurats von Isophorondiisocyanat (Vestanat® 1890), 45 Teile des Isocyanurats von Hexamethylendiisocyanat (Basonat® HI 100 der Fa. BASF SE: Isocyanurat auf Basis von Hexamethylendiisocyanat mit einem NCO-Gehalt gemäß DIN EN ISO 11909 von 21,5 - 22,5%), , 68 Teile Pentaerythrittriacrylat, 50 Teile Aceton, 0,2 Teile Kerobit TBK und 0,02 Teile Dibutylzinndilaurat werden in einem Dreihalskolben 3 Stunde bei 65°C gerührt, dann gibt man 2 Teile Glykolsäure zu, rührt weitere 3 Stunden bei 65°C und gibt anschließend 7 Teile Methanol zu und rührt weitere 3 Stunden bei 65°C. Danach neutralisiert man mit 2 Teilen Triethylamin und tropft innerhalb 30 Minuten bei 60-70°C 250 Teile Wasser zu. Anschließend destilliert man das Aceton ab. Die Teilchengröße der Dispersion, gemessen mit einem Malvern Teilchengrößenmeßgerät, beträgt 132 nm.

### Anwendungstechnische Eigenschaften der Dispersionen

### Beispiel 5:

Zu 140 Teilen der Dispersion aus Beispiel 1 gibt man 2,3 Teile des Photoinitiators Irgacure® 500 (Ciba).

Die so hergestellte Dispersion wird dann mit einem Rakel auf verschiedene Substrate aufgebracht und der UV gehärtete Film anwendungstechnisch untersucht.

### Beispiel 6:

Zu 140 Teilen der Dispersion aus Beispiel 2 gibt man 2,3 Teile des Photoinitiators Irgacure 500 (Ciba).

Die so hergestellte Dispersion wird dann mit einem Rakel auf verschiedene Substrate aufgebracht und der UV gehärtete Film (mit 1400 mJ/cm2 belichtet) anwendungstechnisch untersucht.

### Beispiel 7:

Zu 140 Teilen der Dispersion aus Beispiel 4 gibt man 2,3 Teile des Photoinitiators Irgacure 500 (Ciba).

Die so hergestellte Dispersion wird dann mit einem Rakel auf verschiedene Substrate aufgebracht und der UV gehärtete Film (mit 1400 mJ/cm2 belichtet) anwendungstechnisch untersucht.

### Vergleichsbeispiel 1:

Eine kommerziell erhältliche aliphatische UV härtbare Dispersion (Laromer® 8949 der BASF SE, Ludwigshafen, Deutschland) (Funktionalität 1,7, Dispersion eines aliphatischen Urethanacrylats auf Basis eines Polyesterdiols) wird wie in Beispiel 1 mit Irgacure 500 versetzt und in der gleichen Weise aufgetragen und belichtet.

### Herstellung der Beschichtungsmassen und anwendungstechnische Prüfungen

Die Beschichtungsmassen wurden in einer Schichtdicke von ca. 40 µm mittels Spaltrakel auf Glas, Bonderblech- bzw. weissem Kartonsubstrat aufgebracht und auf einer UV-Belichtungsanlage, ausgestattet mit einem Quecksilber-Hochdruck-UVstrahler mit einer Energie von 120 W/m zweimal belichtet, wobei der Abstand des Strahlers zum Substrat 10 cm betrug und die Geschwindigkeit des Transportbandes, auf dem die beschichteten Substrate liegen und unter der Lampe durchgeführt werden 10 Meter (m)/min betrug.

### Pendeldämpfung

Die Pendeldämpfung (DIN 53 157) ist ein Maß für die Härte der Beschichtung. Die Angabe erfolgt in Schlägen, wobei hohe Werte hohe Härte bedeuten.

### Erichsentiefung

Die Erichsentiefung (DIN 53 156) ist ein Maß für die Flexibilität und Elastizität der Beschichtung. Zur Bestimmung der Erichsentiefung wird die Beschichtungsmasse auf BONDER-Blech 132 aufgebracht und wie oben beschrieben belichtet. Anschließend wird die Erichsentiefung durch Eindrücken einer Metallkugel in die nicht beschichtete Seite des Blechs bestimmt, dabei wird festgestellt, ab welcher Eindrucktiefe der Film reißt. Die Angabe erfolgt in Millimeter (mm), wobei hohe Werte hohe Flexibilität bedeuten.

### Kratzbeständigkeit

Die belichteten Filme wurden mit einem ScotchBrite Fleece unter einer Belastung von 750g mit 10 Doppelhüben verkratzt und der Glanzunterschied bei 60° Meßwinkel vor und nach kratzen bestimmt. Der Glanzerhalt ist der prozentuale Wert aus Glanz nach Verkratzung zu Glanz vor Verkratzung.

### Chemikalienbeständigkeit

Auf die belichteten Beschichtungen wurden Tropfen unterschiedlicher Flüssigkeiten aufgebracht. Nach einer Einwirkzeit von 24 Stunden wird festgestellt ob permanente Schädigungen bzw. Färbungen auftreten und benotet von 0 (= keine Schädigung bzw. Farbe) bis 5 (starke Schädigung bzw. Farbe).

### Pendelhärte

### Fingernagelhärte

Chemikalienstabilität (Soda, Rotwein Kaffee Senf Lippenstift, Kulipaste,)

| | Beispiel 5 | V-Bsp. 1 | Beispiel 6 | Beispiel 7 |
|---|---|---|---|---|
| Pendelhärte (Schläge) | 102 | 110 | 135 | 114 |
| Glanzerhalt (%) | 90 | 7 | 96 | 98 |
| CH-Soda | 0 | 0 | 0 | 0 |
| CH-Rotwein | 0 | 0 | 0 | 0 |
| CH-Kaffee | 0 | 0 | 0 | 0 |
| CH-Senf | 0 | 3 | 0 | 0,5 |
| CH-Lippenstift | 0 | 0 | 0 | 0 |
| CH-Kulipaste | 0 | 4 | 1 | 0 |

## Patentansprüche

1. Mischungen strahlungshärtbarer wasserdispergierbarer Polyurethane, enthaltend mindestens ein strahlungshärtbares wasserdispergierbares Polyurethan (A), aufgebaut aus
(a1) mindestens einem Polyisocyanat auf Basis aliphatischer und/oder cycloapliphatischer Diisocyanate,
(a2) wenigstens einer Verbindung mit mindestens einer, bevorzugt genau einer gegenüber Isocyanatgruppen reaktiven Gruppe und mindestens einer radikalisch polymerisierbaren C=C-Doppelbindung,
(a3) optional wenigstens einer Verbindung mit mindestens zwei gegenüber Isocyanatgruppen reaktiven Gruppen, die ausgewählt sind unter Hydroxy-, Mercapto-, primären und/oder sekundären Aminogruppen, mit einem zahlenmittleren Molgewicht Mₙ von nicht mehr als 500 g/mol,
(a4) optional wenigstens ein Polyesterol, das eine Funktionalität an freien Hydroxygruppen von mindestens 2 aufweist, mit einem zahlenmittleren Molekulargewicht Mₙ zwischen 500 und 4000 (zu bestimmen durch Gelpermeationschromatographie mit Polystyrol als Standard und Tetrahydrofuran als Elutionsmittel),
(a5) mindestens einer Verbindung mit mindestens einer gegenüber Isocyanat reaktiven Gruppe und mindestens einer dispergieraktiven Gruppe,
(a6) optional wenigstens einer von (a2) und (a5) verschiedenen Verbindung, die genau eine gegenüber Isocyanatgruppen reaktive Gruppe aufweist, sowie
(a7) optional wenigstens einem von (a1) verschiedenen Polyisocyanat,
wobei die Menge an gegenüber Isocyanatgruppen reaktiven Gruppen in (a4) 0 bis nicht mehr als 10 mol% bezogen auf die Summe der Isocyanatgruppen in (a1) und (a7) beträgt, und
wobei das Polyurethan (A) eine mindestens 3 mol/kg radikalisch pvlymerisierbare C=C-Doppelbindungen aufweist,
und mindestens ein von (A) verschiedenes strahlungshärtbares wasserdispergierbares Polyurethan (B), aufgebaut aus
(b1) mindestens einem Di- oder Polyisocyanat auf Basis aliphatischer und/oder cycloaliphatischer Diisocyanat,
(b2) wenigstens einer Verbindung mit mindestens einer, bevorzugt genau einer gegenüber Isocyanatgruppen reaktiven Gruppe und mindestens einer radikalisch polymerisierbaren C=C-Doppelbindung,
(b3) optional wenigstens einer Verbindung mit mindestens zwei gegenüber Isocyanatgruppen reaktiven Gruppen, die ausgewählt sind unter Hydroxy-, Mercapto-, primären und/oder sekundären Aminogruppen, mit einem zahlenmittleren Molgewicht Mₙ von nicht mehr als 500 g/mol,
(b4) obligat wenigstens einer Verbindung mit mindestens zwei gegenüber Isocyanatgruppen reaktiven Gruppen, die ausgewählt sind unter Hydroxy-, Mercapto-, primären und/oder sekundären Aminogruppen, mit einem zahlenmittleren Molgewicht Mₙ von mehr als 500 g/mol,
(b5) mindestens einer Verbindung mit mindestens einer gegenüber Isocyanat reaktiven Gruppe und mindestens einer dispergieraktiven Gruppe,
(b6) optional wenigstens einer von (b2) und (b5) verschiedenen Verbindung, die genau eine gegenüber Isocyanatgruppen reaktive Gruppe aufweist, sowie
(b7) optional wenigstens einem von (b1) verschiedenen Polyisocyanat,
wobei es sich bei der wenigstens einen Verbindung (b4) um ein Polyesterdiol mit einem zahlenmittleren Molekulargewicht Mₙ zwischen 500 und 4000 (zu bestimmen durch Gelpermeationschromatographie mit Polystyrol als Standard und Tetrahydrofuran als Elutionsmittel) handelt,
wobei die Menge an gegenüber Isocyanatgruppen reaktiven Gruppen in (b4) mehr als 10 mol% bezogen auf die Summe der Isocyanatgruppen in (b1) und (b7) beträgt,
mit einem Massenverhältnis von (A) : (B) von 5:95 bis 95:5,
**dadurch gekennzeichnet, dass** das Polyurethan (A) eine Glasübergangstemperatur von mehr als 20°C und das Polyurethan (B) eine Glasübergangstemperatur von nicht mehr als 10°C aufweist (zu bestimmen als T_{g} nach der DSC-Methode (Differential Scannning Calorimetry) gem. ASTM 3418/82 mit einer Aufheizrate von 10°C/min.) und es sich bei der Verbindung (a1) um ein Polyisocyanat mit mindestens einer Gruppierung ausgewählt aus der Gruppe bestehend aus Isocyanuraten, Biureten und Allophanaten handelt.

2. Mischungen gemäß Anspruch **1, dadurch gekennzeichnet, daß** es sich bei der Verbindung (b1) um ein Di- oder Polyisocyanat handelt, ausgewählt aus der Gruppe bestehend aus Isocyanuraten, Biureten und Allophanaten auf Basis von 1,6-Hexamethylendiisocyanat.

3. Mischungen gemäß einem der vorstehenden Ansprüche, **dadurch gekennzeichnet, daß** die Verbindungen (a2) und (b2) unabhängig voneinander ausgewählt sind aus der Gruppe bestehend aus 2-Hydroxyethylacrylat, 2-Hydroxyethylmethacrylat, 2-Hydroxypropylacrylat, 2-Hydroxypropylmethacrylat, Pentaerythrittriacrylat und Dipentaerythritpentaacrylat.

4. Mischungen gemäß einem der vorstehenden Ansprüche, **dadurch gekennzeichnet, daß** es sich bei den Verbindungen (b4) um Polyesterdiole handelt, die ausschließlich aus aliphatischen oder cycloaliphatischen Bausteinen aufgebaut sind.

5. Mischungen gemäß einem der vorstehenden Ansprüche, **dadurch gekennzeichnet, daß** die Verbindungen (a5) und (b5) unabhängig voneinander ausgewählt sind aus der Gruppe bestehend aus Dimethylolpropionsäure, Glykolsäure und Thioglykolsäure.

6. Mischungen gemäß einem der vorstehenden Ansprüche, **dadurch gekennzeichnet, daß** das Polyurethan (A) pro 100 mol% reaktive Isocyanatgruppen in (a1) und (a7) (in Summe) wie folgt zusammengesetzt ist:
(a2) 30 bis 95 mol%,
(a3) 0 bis 30 mol%,
(a4) 0 bis 10 mol%,
(a5) 5 bis zu 30 mol%,
(a6) bis zu 10 mol%,
mit der Maßgabe, daß die Summe aller gegenüber Isocyanat reaktiven Gruppen 80 bis 125 mol% der reaktiven Isocyanatgruppen in (a1) und (a7) (in Summe) beträgt.

7. Mischungen gemäß einem der vorstehenden Ansprüche, **dadurch gekennzeichnet, daß** das Polyurethan (B) pro 100 mol% reaktive Isocyanatgruppen in (b1) und (b7) (in Summe) wie folgt zusammengesetzt ist
(b2) 30 bis 90 mol%
(b3) 0 bis 30 mol%,
(b4) 10 bis 40 mol%,
(b5) 5 bis zu 30 mol%,
(b6) bis zu 10 mol%,
mit der Maßgabe, daß die Summe aller gegenüber Isocyanat reaktiven Gruppen 80 bis 125 mol% der reaktiven Isocyanatgruppen in (b1) und (b7) (in Summe) beträgt.

8. Verwendung einer Mischung gemäß einem der vorstehenden Ansprüche zur Beschichtung von Substraten aus Metall, Holz, Papier, Keramik, Glas, Kunststoff, Textil, Leder, Vlies oder mineralischen Baustoffen.

## Claims

1. A mixture of radiation-curable, water-dispersible polyurethanes, comprising at least one radiation-curable water-dispersible polyurethane (A), synthesized from
(a1) at least one polyisocyanate based on aliphatic and/or cycloaliphatic diisocyanates,
(a2) at least one compound having at least one, preferably just one, group that is reactive toward isocyanate groups, and having at least one free-radically polymerizable C=C double bond,
(a3) optionally at least one compound, having at least two groups that are reactive toward isocyanate groups, that are selected from hydroxyl, mercapto, primary and/or secondary amino groups, having a number-average molar weight Mₙ of not more than 500 g/mol,
(a4) optionally at least one polyesterol which has a functionality of free hydroxyl groups of at least 2, having a number-average molecular weight Mₙ of between 500 and 4000 (to be determined by gel permeation chromatography with polystyrene as standard and tetrahydrofuran as eluent),
(a5) at least one compound having at least one isocyanate-reactive group and at least one dispersive group,
(a6) optionally at least one compound other than (a2) and (a5) that has just one group that is reactive toward isocyanate groups, and
(a7) optionally at least one polyisocyanate other than (a1),
the amount of groups in (a4) that are reactive toward isocyanate groups being 0 to not more than 10 mol%, based on the sum of the isocyanate groups in (a1) and (a7), and
the polyurethane (A) containing at least 3 mol/kg of free-radically polymerizable C=C double bonds,
and at least one radiation-curable water-dispersible polyurethane (B), different from (A) and synthesized from
(b1) at least one di- or polyisocyanate based on aliphatic and/or cycloaliphatic diisocyanate,
(b2) at least one compound having at least one, preferably just one, group that is reactive toward isocyanate groups, and having at least one free-radically polymerizable C=C double bond,
(b3) optionally at least one compound having at least two groups that are reactive toward isocyanate groups, that are selected from hydroxyl, mercapto, primary and/or secondary amino groups, having a number-average molar weight Mₙ of not more than 500 g/mol,
(b4) obligatorily at least one compound having at least two groups that are reactive toward isocyanate groups, that are selected from hydroxyl, mercapto, primary and/or secondary amino groups, having a number-average molar weight Mₙ of more than 500 g/mol,
(b5) at least one compound having at least one isocyanate-reactive group and at least one dispersive group,
(b6) optionally at least one compound other than (b2) and (b5) that has just one group that is reactive toward isocyanate groups, and
(b7) optionally at least one polyisocyanate other than (b1),
the at least one compound (b4) being a polyesterdiol having a number-average molecular weight Mₙ of between 500 and 4000 (to be determined by gel permeation chromatography with polystyrene as standard and tetrahydrofuran as eluent),
the amount of groups in (b4) that are reactive toward isocyanate groups being more than 10 mol%, based on the sum of the isocyanate groups in (b1) and (b7),
with a mass ratio (A):(B) of 5:95 to 95:5,
wherein the polyurethane (A) has a glass transition temperature of more than 20°C and the polyurethane (B) has a glass transition temperature of not more than 10°C (to be determined as T_{g} according to the DSC method (Differential Scanning Calorimetry) according to ASTM 3418/82 at a heating rate of 10°C/min) and the compound (a1) is a polyisocyanate having at least one moiety selected from the group consisting of isocyanurates, biurets, and allophanates.

2. The mixture according to claim 1, wherein the compound (b1) is a di- or polyisocyanate selected from the group consisting of isocyanurates, biurets, and allophanates based on 1,6-hexamethylene diisocyanate.

3. The mixture according to either of the preceding claims, wherein the compounds (a2) and (b2) independently of one another are selected from the group consisting of 2-hydroxyethyl acrylate, 2-hydroxyethyl methacrylate, 2-hydroxypropyl acrylate, 2-hydroxypropyl methacrylate, pentaerythrityl triacrylate, and dipentaerythrityl pentaacrylate.

4. The mixture according to any of the preceding claims, wherein the compounds (b4) are polyesterdiols synthesized exclusively from aliphatic or cycloaliphatic building blocks.

5. The mixture according to any of the preceding claims, wherein the compounds (a5) and (b5) independently of one another are selected from the group consisting of dimethylolpropionic acid, glycolic acid, and thioglycolic acid.

6. The mixture according to any of the preceding claims, wherein the polyurethane (A) is composed, per 100 mol% of reactive isocyanate groups in (a1) and (a7) (in total), as follows:
(a2) 30 to 95 mol%,
(a3) 0 to 30 mol%,
(a4) 0 to 10 mol%,
(a5) 5 up to 30 mol%,
(a6) up to 10 mol%,
with the proviso that the sum of all isocyanate-reactive groups is 80 to 125 mol% of the reactive isocyanate groups in (a1) and (a7) (in total).

7. The mixture according to any of the preceding claims, wherein the polyurethane (B) is composed, per 100 mol% of reactive isocyanate groups in (b1) and (b7) (in total), as follows
(b2) 30 to 90 mol%,
(b3) 0 to 30 mol%,
(b4) 10 to 40 mol%,
(b5) 5 up to 30 mol%,
(b6) up to 10 mol%,
with the proviso that the sum of all isocyanate-reactive groups is 80 to 125 mol% of the reactive isocyanate groups in (b1) and (b7) (in total).

8. The use of a mixture according to any of the preceding claims to coat substrates comprising metal, wood, paper, ceramic, glass, plastic, textile, leather, nonwoven, or mineral construction materials.

## Revendications

1. Mélanges de polyuréthanes dispersibles dans l'eau et durcissables par rayonnement, contenant au moins un polyuréthane (A) dispersible dans l'eau et durcissable par rayonnement, constitué par :
(a1) au moins un polyisocyanate à base de diisocyanates aliphatiques et/ou cycloaliphatiques,
(a2) au moins un composé contenant au moins un, de préférence exactement un, groupe réactif avec les groupes isocyanate et au moins une double liaison C=C polymérisable par voie radicalaire,
(a3) éventuellement au moins un composé contenant au moins deux groupes réactifs avec les groupes isocyanate, qui sont choisis parmi les groupes hydroxy, mercapto, amino primaire et/ou secondaire, ayant un poids moléculaire moyen en nombre Mₙ inférieur ou égal à 500 g/mol,
(a4) éventuellement au moins un polyestérol qui présente une fonctionnalité d'au moins 2 sur les groupes hydroxy libres, avec un poids moléculaire moyen en nombre Mₙ compris entre 500 et 4000 (à déterminer par chromatographie par perméation de gel avec du polystyrène en tant que standard et du tétrahydrofurane en tant qu'agent d'élution),
(a5) au moins un composé contenant au moins un groupe réactif avec les isocyanates et au moins un groupe à action dispersante,
(a6) éventuellement au moins un composé différent de (a2) et (a5), qui comprend exactement un groupe réactif avec les groupes isocyanate, ainsi que
(a7) éventuellement au moins un polyisocyanate différent de (a1),
la quantité de groupes réactifs avec les groupes isocyanate dans (a4) étant de 0 à pas plus de 10 % en moles, par rapport à la somme des groupes isocyanate dans (a1) et (a7), et
le polyuréthane (A) comprenant au moins 3 mole/kg de doubles liaisons C=C polymérisables par voie radicalaire,
et au moins un polyuréthane (B) dispersible dans l'eau et durcissable par rayonnement différent de (A), constitué par :
(b1) au moins un di- ou polyisocyanate à base d'un diisocyanate aliphatique et/ou cycloaliphatique,
(b2) au moins un composé contenant au moins un, de préférence exactement un, groupe réactif avec les groupes isocyanate et au moins une double liaison C=C polymérisable par voie radicalaire,
(b3) éventuellement au moins un composé contenant au moins deux groupes réactifs avec les groupes isocyanate, qui sont choisis parmi les groupes hydroxy, mercapto, amino primaire et/ou secondaire, ayant un poids moléculaire moyen en nombre Mₙ inférieur ou égal à 500 g/mol,
(b4) obligatoirement au moins un composé contenant au moins deux groupes réactifs avec les groupes isocyanate, qui sont choisis parmi les groupes hydroxy, mercapto, amino primaire et/ou secondaire, ayant un poids moléculaire moyen en nombre Mₙ supérieur à 500 g/mol,
(b5) au moins un composé contenant au moins un groupe réactif avec les isocyanates et au moins un groupe à action dispersante,
(b6) éventuellement au moins un composé différent de (b2) et (b5), qui comprend exactement un groupe réactif avec les groupes isocyanate, ainsi que
(b7) éventuellement au moins un polyisocyanate différent de (b1),
l'au moins un composé (b4) étant un polyester-diol ayant un poids moléculaire moyen en nombre Mₙ compris entre 500 et 4000 (à déterminer par chromatographie par perméation de gel avec du polystyrène en tant que standard et du tétrahydrofurane en tant qu'agent d'élution),
la quantité de groupes réactifs avec les groupes isocyanate dans (b4) étant plus de 10 % en moles par rapport à la somme des groupes isocyanate dans (b1) et (b7),
en un rapport en masse (A):(B) de 5:95 à 95:5,
**caractérisé en ce que** le polyuréthane (A) présente une température de transition vitreuse de plus de 20 °C et le polyuréthane (B) présente une température de transition vitreuse inférieure ou égale à 10 °C (à déterminer en tant que T_{g} selon la méthode DSC (Differential Scanning Calorimetry) selon ASTM 3418/82 avec un taux de chauffage de 10 °C/min) ; et le composé (a1) est un polyisocyanate contenant au moins un groupe choisi dans le groupe constitué par les isocyanurates, les biurets et les allophanates.

2. Mélanges selon la revendication 1, **caractérisé en ce que** le composé (b1) est un di- ou polyisocyanate, choisi dans le groupe constitué par les isocyanurates, les biurets et les allophanates à base de diisocyanate de 1,6-hexaméthylène.

3. Mélanges selon l'une quelconque des revendications précédentes, **caractérisés en ce que** les composés (a2) et (b2) sont choisis indépendamment les uns des autres dans le groupe constitué par l'acrylate de 2-hydroxyéthyle, le méthacrylate de 2-hydroxyéthyle, l'acrylate de 2-hydroxypropyle, le méthacrylate de 2-hydroxypropyle, le triacrylate de pentaérythrite et le pentaacrylate de dipentaérythrite.

4. Mélanges selon l'une quelconque des revendications précédentes, **caractérisés en ce que** les composés (b4) sont des polyester-diols, qui sont constitués exclusivement de constituants aliphatiques ou cycloaliphatiques.

5. Mélanges selon l'une quelconque des revendications précédentes, **caractérisés en ce que** les composés (a5) et (b5) sont choisis indépendamment les uns des autres dans le groupe constitué par l'acide diméthylolpropionique, l'acide glycolique et l'acide thioglycolique.

6. Mélanges selon l'une quelconque des revendications précédentes, **caractérisés en ce que** le polyuréthane (A) est composé de la manière suivante pour 100 % en moles de groupes isocyanate réactifs dans (a1) et (a7) (au total) :
(a2) 30 à 95 % en moles,
(a3) 0 à 30 % en moles,
(a4) 0 à 10 % en moles,
(a5) 5 à 30 % en moles,
(a6) jusqu'à 10 % en moles,
à condition que la somme de tous les groupes réactifs avec les isocyanates soit de 80 à 125 % en moles des groupes isocyanate réactifs dans (a1) et (a7) (au total).

7. Mélanges selon l'une quelconque des revendications précédentes, **caractérisés en ce que** le polyuréthane (B) est composé de la manière suivante pour 100 % en moles de groupes isocyanate réactifs dans (b1) et (b7) (au total) :
(b2) 30 à 90 % en moles,
(b3) 0 à 30 % en moles,
(b4) 10 à 40 % en moles,
(b5) 5 à 30 % en moles,
(b6) jusqu'à 10 % en moles,
à condition que la somme de tous les groupes réactifs avec les isocyanates soit de 80 à 125 % en moles des groupes isocyanate réactifs dans (b1) et (b7) (au total).

8. Utilisation d'un mélange selon l'une quelconque des revendications précédentes pour le revêtement de substrats en métal, bois, papier, céramique, verre, plastique, textile, cuir, non-tissé ou matériaux minéraux.
